# EUROPEAN PATENT SPECIFICATION

(11) **EP 4 500 066 B1**
(45) Date of publication and mention of the grant of the patent: **15.07.2026**
(21) Application number: 23713686.6
(22) Date of filing: 28.03.2023
(51) Int. Cl.: F16L 55/054, F15B 1/16

(54) **DEVICE FOR COMPENSATING FLUID PRESSURE VARIATIONS IN A FLOW CHANNEL**
VORRICHTUNG ZUM KOMPENSIEREN VON DRUCKSCHWANKUNGEN IN EINEM STRÖMUNGSKANAL
DISPOSITIF POUR COMPENSER LES VARIATIONS DE PRESSION DE FLUIDE DANS UN CANAL D'ÉCOULEMENT

(30) Priority: 28.03.2022 EP 22164765
(43) Date of publication of application: 05.02.2025
(73) Proprietor: H. Kjærbye Invent Aps, Askelien 4 8920 Randers NV (DK)
(72) Inventor: KJÆRBYE, Henrik, 8920 Randers NV (DK); SEGURA REYES, Rodrigo Esteban, 8920 Randers NV (DK); DØLRATH TOFT, Mathias, 8920 Randers NV (DK)
(74) Representative: Høiberg P/S
(86) International application number: PCT/EP2023/057998
(87) International publication number: WO 2023/186892

(56) References cited:
- JP-A- 2007 333 183
- US-A- 2 530 190
- US-A- 2 854 029

## Description

### Field of disclosure

The disclosure relates to a flow compensation device configured for compensating for pressure variations in a flow channel.

### Background

Industrial pipe systems for handling fluids often require a constant fluid for the correct manufacturing and transportation of products. This requirement is essential in most of the processes related with the product processing in the pharmacological, petrochemistry and food industry.

In a food industry like the diary production, high standards of cleanliness are required for the handling processing of products. Hence, costly hygienic and aseptic systems are needed to meet the mandatory health regulations. Moreover, a precise control of fluids being transported through pipes in the low flow regime, is highly desirable in the pharmacological industry. In general, variations of pressure inside these systems are detrimental for the quality manufacturing of the products and the structural integrity of the different components.

Some solutions addressing the above mentioned requirements use a numerous amount of valves, pipes and tanks, making the systems costly and hard to maintain under sterile conditions. Thus, any advancement allowing to control pressure variations of products flowing through pipe systems in a simple way and meeting cleanliness requirements is of interest for the mentioned industries.

US 2,854,029 discloses a dampener for pipe lines. It discloses a mandrel made from spring steel in the form of a cylinder with a break or slot running the entire length of the cylinder wall. A sleeve is placed over the mandrel in a stretched or expanded condition so that when the supporting mandrel contracts in diameter during use the resilient sleeve is not forced by fluid pressure to assume a state smaller than its normal, free position would be. In such a solution the slot running the entire length of the cylinder wall will provide a chewing motion on the sleeve as the mandrel compress and expands as the pressure varies and thereby a high wear locally on the sleeve will occur.

Thus, it is one object herein to disclose a flow compensation device with prolonged life expectancy and where any break or deterioration of the device can be quickly and easily identified.

### Summary

Thus, there exist a need to address the problem of fluid pressure variations in flow channels as will be discussed herein.

Current flow compensation and pressure variation dampening devices are typically based on sets of pipes, valves and tanks. The present disclosure is related to a flow compensation based on elastic diaphragms in contact with the fluid and supporting structures. Furthermore, the present disclosure discloses embodiments of a flow compensation device which is easy to maintain and where structural and leak inspection is facilitated.

The present disclosure relates to a flow compensation device configured for compensating fluid pressure variations in a flow channel comprising:
- a confined annular flow channel configured for a fluid flow during operation,
- at least one inflexible supporting structure for supporting at least one elastic diaphragm, comprising at least one opening, and
- the elastic diaphragm, having a proximal facing surface in contact with the fluid during operation and a distal facing surface not in contact with the fluid during operation,
wherein the supporting structure and diaphragm are superimposed on top of each other so that the elastic diaphragm overlaps the supporting structure and the at least one opening.

The presently disclosed device is based on the transfer of energy in the flow channel containing the flow of fluid, typically a food grade pipe. Variations of pressure inside it increase the energy contained in the flow channel increasing the energy carried by it. The inventors have realized that an elastic membrane or diaphragm placed with one of its surfaces in contact with the flow of fluid can absorb part of the excess energy generated by the variation of pressure by allowing the diaphragm to expand through or into the at least one opening or a plurality of openings while the inflexible supporting structure is inflexible and rigid and thus withstands deformation during pressure variation. The diaphragm effectively absorbs the excess energy and transforms it into potential energy by stretching the elastic diaphragm, thus being stored in a deformation of the elastic diaphragm. Once the pressure-increase finishes, the deformed diaphragm steadily supplies its absorbed excess energy into the flow of fluid until reaching the initial relaxed position. This mechanism effectively dampens any positive or negative pressure variation being input into the device, supplying an output flow of constant pressure and helps streamline flow into and out pulsating pumps. In the following, the supporting structure should be considered inflexible as discussed above even if not explicitly referred to as inflexible or rigid.

Thus, as can be understood the device compensates for fluid pressure variations by storing energy which typically will result in a dampening effect of the pressure variation but does not necessarily removes the pulsation occurring from the pressure variations. By adjusting the system as will be discussed the pulsation may thus be dampened to a desired level for a specific system comprising different units or processes that may be sensitive to high pressure variations.

This provides a flow compensation device, which is self-sustained in terms of leak detection and does not require flush steam, water or air to detect defects to the readily accessible aperture for inspection and leak detection.

Typically the annular flow channel will be confined by a housing structure, for example a cylindrical housing structure such as a pipe or a tube adapted to be inserted in a larger pipe system used to transport the liquid around to different treatment and handling processes.

In one aspect, a flow compensation system is provided comprising an external pump and a flow compensation device in fluid communication through a mutual flow channel for the flow of a liquid product, wherein the flow compensation device reduces the pressure variations of the fluid being supplied by the pump.

Such types of pulsating pumps create variations in flow and in situations where such variations are undesired a flow compensation device as disclosed herein may be used.

In another embodiment, a system is provided comprising a plurality of flow compensation devices connected in parallel or in series in fluid communication through a mutual flow channel for the flow of a liquid product.

### Detailed description

Further embodiment and description in relation to the above aspects will be discussed in the following in more detail.

In one embodiment the at least one inflexible supporting structure comprises a plurality of openings. This distributes the load of the elastic diaphragm on the inflexible supporting structure and prolongs the life of the elastic diaphragm as the wear of the diaphragm is distributed across the plurality of openings.

Furthermore, in another embodiment, the at least one opening is defined by the inflexible supporting structure encircling the at least one opening. Thus, the inflexible supporting structure defines the boundary of the at least one opening.

In another embodiment the at least one inflexible supporting structure comprises a stiffness which prevents deformation of the at least one inflexible supporting structure during operation of the flow compensation device and the elastic diaphragm comprises an elasticity which allows the elastic diaphragm to deform during operation of the flow compensation device.

This ensures that the inflexible supporting structure provides a frame which is stable during the fluid pressure variation such that the elastic diaphragm will absorb the variations within the at least one or plurality of openings in the inflexible supporting structure.

For example, this may be provided by designing the flow compensation device to operate within a maximum pressure 'pₘₐₓ' of the fluid flow during operation, where the at least one inflexible supporting structure is designed such that deformation occurs above the maximum pressure, whereas the elastic diaphragm is designed such that deformation occurs below the maximum pressure of the flow compensations device.

Moreover, in a further embodiment the size and shape of the at least one opening and the elasticity of the diaphragm are matched to allow a desired expansion of the elastic diaphragm through the plurality of openings. The dimensions of the openings will for example be adjusted based on the pressure range in which the system operates and/or depend on the design duty.

As can be understood the flow compensation device may be optimized for specific operation conditions by controlling and adjusting different aspects of in particular the inflexible supporting structure and elastic diaphragm.

For example, the stability or rigidness of the inflexible supporting structure can for example be controlled by providing a desired stiffness of the inflexible supporting structure as discussed. This can for example be done by selecting an appropriate material for the inflexible supporting structure, e.g. a metal such as stainless steel, titanium, aluminium, i.a. and/or polymers like PET (polyethylene terephthalate), PEEK (Polyetheretherketon), PA (Polyamid), i.a. Moreover, the thickness may also affect the stiffness and thus the inflexible and rigid properties of the inflexible supporting structure.

Moreover, providing the at least one opening, and in particular a plurality of openings, may compromise the stability of the inflexible supporting structure and thus the shape, dimensions and distribution of the openings should be considered and the thickness and material may also further be chosen for a specific inflexible supporting structure design.

For the elastic diaphragm other consideration should be done where the elasticity of the elastic diaphragm is controlled. For example, several characteristics of the elastic diaphragm may be adjusted for a certain purpose. Primarily, as discussed herein, an elastic diaphragm has the ability to be deformed but absorbs the energy such that when the force providing the deformation is removed or reduced the elastic diaphragm will return back to, or towards, it initial shape, and therefore an elastic material should be chosen, such as a silicone rubber and/or thermoplastic rubbers such like TPE-S, TPE-O, MPR, i.a. However, other characteristics may also be selected or determined, for example the thickness of the materials and/or the temperature under which the elastic diaphragm will be operating.

Thus, the individual characteristic and properties of the inflexible supporting structure and the elastic diaphragm should be considered. However, these should also be considered when the inflexible supporting structure and the elastic diaphragm are superimposed on top of each other.

For example, in one embodiment it can be considering that the flow compensation device is designed to compensate fluid pressure variation within a pressure range of pₘᵢₙ - pₘₐₓ. At pressure below pₘᵢₙ the inflexible supporting structure and the elastic diaphragm can for example be designed such that no energy is absorbed by the elastic diaphragm, e.g. the elastic diaphragm will not expand through the at least one opening of the inflexible supporting structure. At pressure below pₘₐₓ the inflexible supporting structure and the elastic diaphragm can for example be designed such that no ballooning occurs of the elastic diaphragm through the at least one opening of the inflexible supporting structure. As discussed herein ballooning should be understood as a situation where the material of the elastic diaphragm becomes so thin in a certain area that ballooning occurs which substantially compromises the memory of the material, i.e. its ability to return to its initial state, but also considerably increases the risk of the elastic diaphragm to rupture.

Typically pₘₐₓ will be the upper pressure range for which ballooning is avoided and also the maximum pressure level for which the flow compensation device is designed for operation. However, in another embodiment several maximum pressures may be used for the design of the flow compensation device. For example, as described a first maximum pressure under which no ballooning p_{balloon} may be used as a design parameter, a second maximum pressure where rupturing pᵣᵤₚₜᵤᵣₑ may be used as a pressure at which the elastic diaphragm ruptures and a third maximum pressure for the system p_{system} as a whole may be used as a pressure limit under which the system is designed not to fail. Thus p_{balloon} < pᵣᵤₚₜᵤᵣₑ < p_{system}. In such case the elastic diaphragm may work as an additional safety measure in case of sudden pressure build up where the elastic diaphragm rupture before the pressure build up damages the rest of the system. For most materials however, when ballooning occurs the material will most likely rupture as well or be severely compromised in its function. Thus, in some embodiments P_{balloon} = pᵣᵤₚₜᵤᵣₑ.

As mentioned, other parameters may be considered while designing, for example the type of fluid flowing through the flow compensation device. In one embodiment, the fluid can for example comprise a dairy product, juice or a fluid food product.

As discussed the plurality of openings comprised on the supporting structure may thus be distributed, sized and shaped depending on the fluid viscosity, flow rate and pressure variations range intended in the flow channel, to accommodate different amounts of exposure of the diaphragm proximal surface to the fluid.

Similarly, in another or additional embodiment the elasticity of the at least one diaphragm may thus depend on the fluid viscosity, flow rate, mass and pressure variations range of the product in the flowing channel.

In one embodiment the fluid compensation device will be designed to compensate for fluid pressure variation where the pressure variation is a positive pressure variation or a negative pressure variation. In such case the fluid distal surface of the at least one diaphragm or the fluid proximal surface of the at least one diaphragm may be provided in contact with the supporting structure.

However, in another embodiment, if the pressure variations varies between positive and negative pressure both surfaces of the at least one diaphragm may be arranged in contact with an inflexible supporting structure. For example, this may be in the shape of a first and second inflexible cylindrical supporting structures with different diameters where the elastic diaphragm is arranged between the first and second cylindrical supporting structures.

In one embodiment the confined annular flow channel comprises an inlet aperture for receiving fluid and an outlet aperture for extracting fluid.

In another embodiment the flow compensation device further comprises a housing structure confining the annular flow channel extending along a longitudinal axis of the annular flow channel and comprises a dampening channel extending perpendicular to the longitudinal axis, forming a T-shape construction, wherein the supporting structure and the diaphragm is arranged in the dampening channel.

The flow compensation device according to any one of the preceding embodiments, wherein the at least one supporting structure and the elastic diaphragm form a tubular sandwich construction extending along a longitudinal axis L - L, and where the proximal facing surface of the diaphragm in the tubular sandwich construction defines part of the flow channel.

This provides the option of arranging the tubular sandwich construction such that the flow of the fluid is not or minimally interrupted during operation as the tubular sandwich construction may be arranged along the flow direction, e.g. the longitudinal axis L - L and the flow direction are parallel during operation.

In such an embodiment the inlet aperture can for example be arranged upstream along the longitudinal axis and the outlet aperture can be arranged downstream and radially opposite the tubular sandwich construction.

It may be desired to observe and monitor the operation of the flow compensation device to ensure that it is operating properly and to determine whether maintenance should be done. In one embodiment a visual inspection may be provided by providing the at least one inflexible supporting structure as a cylindrical supporting structure and the cylindrical supporting structure extends through the annular flow channel, where the cylindrical supporting structure defines an observation channel extending there through.

In one embodiment the cylindrical supporting structure can for example be arranged coaxially along a longitudinal axis L - L of the flow channel.

For example, the flow compensation device may further comprises a cylindrical housing extending along the longitudinal axis L - L between a first end and a second end, wherein the cylindrical housing and the first and second ends define the outer limit of the flow channel.

In a further embodiment the first and the second ends of the cylindrical housing can be closed and the cylindrical supporting structure may extend through the closed ends thereof.

An inlet aperture and an outlet aperture may be provided in the cylindrical housing.

In one embodiment, providing a cylindrically shaped flow compensation device, the flow compensation may further comprise
- a cylindrical housing extending along the longitudinal axis L - L between a closed first end and a closed second end, wherein the cylindrical housing and the first and second closed ends defined the outer limit of the flow channel,
- that the at least one supporting structure is a cylindrical supporting structure, arranged coaxially along the longitudinal axis L - L inside the cylindrical housing and where the cylindrical supporting structure has a radial extent smaller than the radial extent of the cylindrical housing wherein the cylindrical supporting structure defines the inner limit of the flow channel, the cylindrical supporting structure further comprises multiple through going geometrically distinct openings extending radially through the cylindrical supporting structure,
- that the elastic diaphragm, is arranged on the outer surface of the cylindrical supporting structure facing radially away from the longitudinal axis L - L , where the elastic diaphragm overlaps the multiple through going geometrically distinct openings,
- a product inlet arranged at the first closed end, extending radially from the cylindrical housing, and
- a product outlet arranged at the second closed end, extending radially from the cylindrical housing diametrically opposite the product inlet,
- wherein the cylindrical supporting structure extends through the first and second ends of the cylindrical housing, providing an observation channel defined by the inner surface of the cylindrical supporting structure facing the longitudinal axis L - L.

For example, the annular confined flow channel is defined by the cylindrical housing and the proximal facing surface of the diaphragm.

The elastic diaphragm may in one embodiment be reversibly clamped to the closed first end and the closed second end, which allows the elastic diaphragm to be replaced if needed.

As discussed, a flow compensation device configured for compensating fluid pressure variations in a flow channel may thus be provided, where the flow compensation device comprises,
- a cylindrical housing extending along the longitudinal axis L - L between a closed first end and a closed second end, wherein the cylindrical housing and the first and second closed ends defined the outer limit of a flow channel,
- a cylindrical supporting structure, arranged coaxially along the longitudinal axis L - L inside the cylindrical housing and where the cylindrical supporting structure has a radial extent smaller than the radial extent of the cylindrical housing wherein the cylindrical supporting structure defines the inner limit of the fluid chamber, the cylindrical supporting structure further comprises multiple through going geometrically distinct openings extending radially through the cylindrical supporting structure,
- an elastic diaphragm arranged on the outer surface of the cylindrical supporting structure facing radially away from the longitudinal axis L - L , where the elastic diaphragm overlaps the multiple through going geometrically distinct openings,
- a product inlet arranged at the first closed end, extending radially from the cylindrical housing, and
- a product outlet arranged at the second closed end, extending radially from the cylindrical housing diametrically opposite the product inlet,
wherein the cylindrical supporting structure extends through the first and second ends of the cylindrical housing, providing an observation channel defined by the inner surface of the cylindrical supporting structure facing the longitudinal axis L - L.

### Description of the drawings

The disclosure will in the following be described in greater detail with reference to the accompanying drawings:
Fig. 1a, 1b and 1c, show schematic views of a preferred embodiment of a compensating fluid pressure device as disclosed herein,
Fig. 2a and 2b, show detailed schematic views of two embodiments of the inflexible supporting structure and the diaphragm of the flow compensation device disclosed herein,
Fig. 3, shows a schematic view of another embodiment of a flow compensation device as disclosed herein,
Fig. 4, shows a schematic view of an alternative embodiment of a flow compensation device as disclosed herein, and
Fig. 5a - 5e, shows an embodiment of an inflexible supporting structure as disclosed herein, where Figs. 5c - 5e shows a sectional view of respective sections C - C, D - D and E - E as indicated in Fig. 5b.

### Detailed description of the drawings

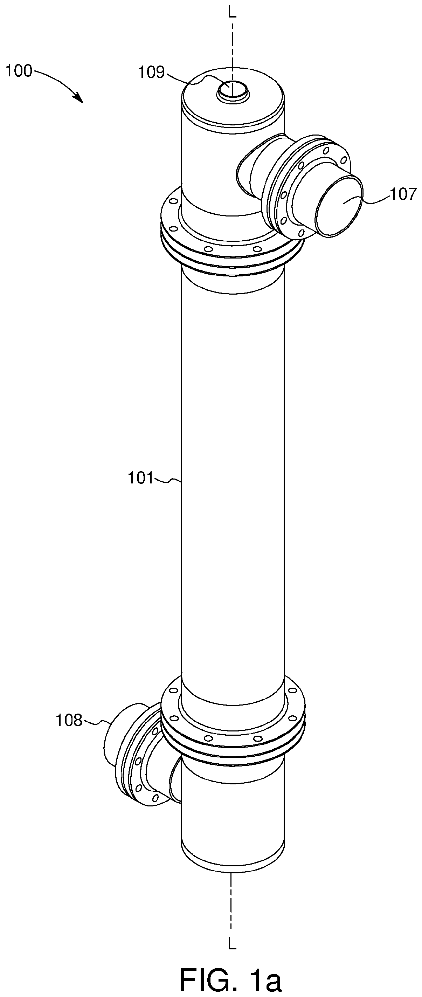

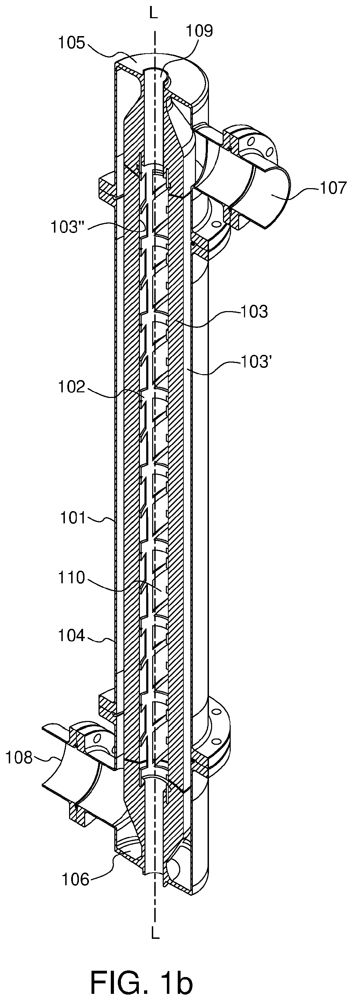

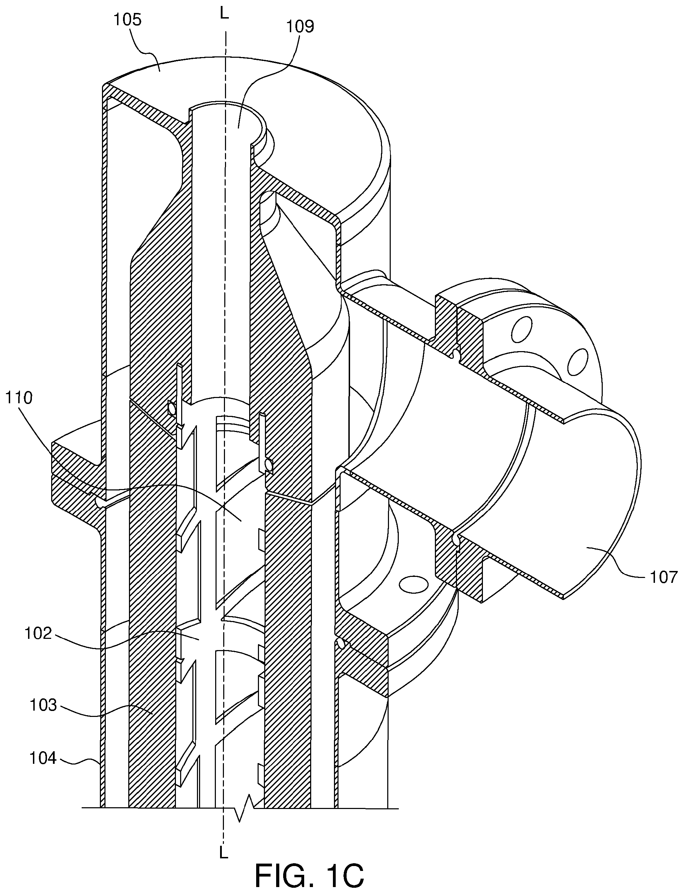

One embodiment of a flow compensation device 100 as disclosed herein is shown in Fig.1a, where a cross section of the flow compensation device is shown in Fig.1b and an enlarged upper view of the cross section is shown in Fig.1c. The flow compensation device of the preferred embodiment comprises a confined annular flow channel 101 where a product (not shown in Fig. 1a, 1b or 1c), such as a fluid dairy product, juice or other fluid food product, may flow during operation of the device. An inflexible supporting structure 102 is arranged in the flow compensation device, and the structure supports an elastic diaphragm 103. The elastic diaphragm having a fluid proximal facing surface 103' in contact with the fluid during operation and a distal facing surface 103" not in contact with the fluid during operation. The supporting structure 102 have a plurality of openings 110 and the supporting structure and diaphragm are superimposed on top of each other so that the elastic diaphragm overlaps the supporting structure and the openings. This allows the elastic diaphragm to expand through the openings caused by absorbing pressure variations of the fluid.

Other fluids comprising comparable viscosity, density and flow rate to the previously disclosed products might be used on the flow compensation device, such as pharmaceutical fluids, chemical fluids or petrochemical fluids.

In one embodiment, the openings in the supporting structure can be imprinted by means of laser cut technique. The supporting structure and the housing structure can for example be made of a metal, such as stainless steel or titanium. In another embodiment the supporting structure might be made of polymers, such as nylon or PPE. The elastic diaphragm can for example be made of food grade elastomers such as silicone rubber or EPDM rubber.

The outer limit of the annular flow channel may be defined by a cylindrical housing 104 extending along the longitudinal axis L - L between a closed first end 105 and a closed second end 106.

In one embodiment a product inlet is arranged 107 at the first closed end extending radially from the cylindrical housing and allows entry of fluid to the device. A product outlet 108 may be arranged at the second closed end, extending radially from the cylindrical housing diametrically opposite the product inlet. The product outlet allows for the extraction of the fluid.

In an embodiment the inflexible supporting structure may be cylindrical, and the cylindrical supporting structure 102 may extend through the annular flow channel. The cylindrical supporting structure is hollow, and thus defines an observation aperture/channel 109, defined by the inside of the cylindrical supporting structure, through which the diaphragm may be inspected for integrity and leak detection.

The observation aperture 109 further reduces the need of flushing with either steam, water or air of the device since inspection of the device is simple. Accordingly, cleaning which typically is done by using steam and/or flushing can be reduced or even avoided.

The cylindrical supporting structure may be arranged coaxially along a longitudinal axis L - L of the flow channel between a first end and a second end.

For example as shown in Fig.1, the cylindrical supporting structure extends through the first and second closed ends 105, 106. This provide easy access to the observation aperture which allows to monitor the integrity of the diaphragm, check for fluid leaks in the diaphragm and to flush the fluid distal surface of the diaphragm.

The cylindrical supporting structure 102 can be arranged coaxially along the longitudinal axis L - L inside the cylindrical housing 104 and the cylindrical supporting structure may have a radial extent smaller than the radial extent of the cylindrical housing. Thus the inner limit of the flow channel is defined by the cylindrical supporting structure or the diaphragm overlapping the supporting structure.

The cylindrical supporting structure may further comprise multiple through going geometrically distinct openings 110 extending radially through the cylindrical supporting structure.

As previously disclosed, the cylindrical supporting structure may in one embodiment extend through the first and second ends 105, 106 of the cylindrical housing, providing an observation channel 109 defined by the inner surface of the cylindrical supporting structure facing the longitudinal axis L - L.

In one embodiment the elastic diaphragm 103 is arranged on the outer surface of the cylindrical supporting structure facing radially away from the longitudinal axis L - L. The elastic diaphragm overlaps the multiple through going geometrically distinct openings. This allows for the elastic diaphragm to expand into and/or through the opening in order to dampen pressure and flow variations of the fluid.

Accordingly, the fluid will flow through the cavity created by the cylindrical housing and the proximal facing surface of the diaphragm, also defined by the cylindrical supporting structure.

The elastic diaphragm may in another embodiment be reversibly clamped to the closed first end and the closed second end. This allows for the replacement of the elastic diaphragm in case it breaks or rupture. Also in one embodiment both the elastic diaphragm and the supporting structure are reversible clamped so they both may be replaced.

In the embodiment of Fig.1 the fluid distal surface of the at least one diaphragm 103 is in contact with the supporting structure 102. However, other embodiments may be provided where the supporting structure is placed in contact with the fluid proximal surface.

In one embodiment the flow compensation device may comprise an inlet aperture 107 through which the fluid enters the device to be in contact with the elastic diaphragm and an outlet aperture 108 for extracting fluid. Said inlet and outlet can be placed at any part of the device, preferably at places where the diaphragm-fluid contact is maximized along the flow direction inside the device. This allows for an increased ability for dampening pressure fluctuations thereby further streamlining the flow of product fluid into and out of the pulsating pumps, piston pumps or similar devices working in series with other types of pumps or constant flow systems such as regulating valves.

In any of the previous embodiments, the fluid is configured to flow through the cavity created by the external cylindrical housing and the proximal facing surface of the diaphragm. The elastic diaphragm is reversibly clamped to the closed first end and the closed second end allowing a simple replacement and maintenance of the device.

In the current disclose the terms proximal and distal refers to surfaces or parts of elements and their orientation in respect to the flow channel, wherein fluid will flow during operation. Proximal is used for surfaces or parts facing towards the flow channel and distal is used for surfaces or parts facing away from the flow channel. As an example, the diaphragm's proximal surface is facing the flow channel is in contact with the fluid during operations, whereas the distal surface is facing away from the flow channel and is not in contact with the fluid during operation.

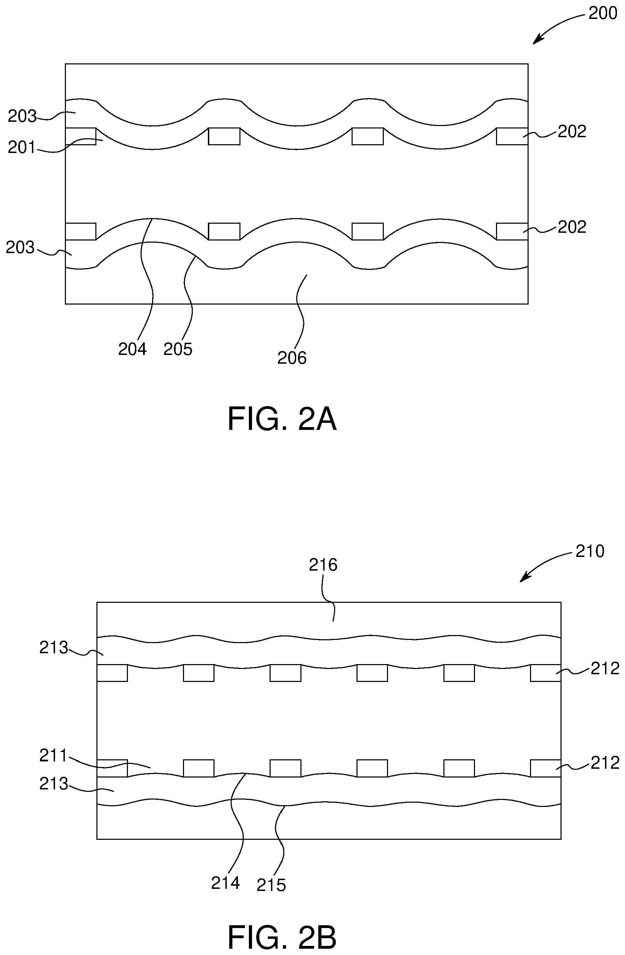

Having the elastic diaphragm overlapping the supporting structure and the at least one opening enables the design of the openings to accommodate multiple ranges of different pressure variations as will be discussed further in Fig.2. However, this consideration may be applied to all the embodiments disclosed herein.

As shown in Fig. 2a and 2b in the context of the present disclosure two embodiments 200, 210 are disclosed of a inflexible supporting structure 202, 212 for supporting an elastic diaphragm 203, 213. The elastic diaphragm comprises a proximal facing surface 205, 215 in contact with the fluid during operation and a distal facing surface 204, 214 not in contact with the fluid during operation. The supporting structure and diaphragm are superimposed on top of each other so that the elastic diaphragm overlaps the supporting structure and openings 201, 211 formed in the supporting structure. The openings 201, 211 in the supporting structure 202, 212 is understood as an area on such structure where the material has been removed through the whole thickness of the structure, allowing the diaphragm 203, 213 to extend into the opening. This allows for pressure in the fluid to be transferred into an energy build up in the diaphragm. Thus, when the pressure falls the energy build up in the diaphragm is returned to the fluid flow and the diaphragm returns towards its neutral position where no pressure is exerted on it. Accordingly, a pulsating pressure/fluid flow may thus be reduced or compensated.

In another embodiment, the opening may be described as an area on the supporting structure where the material has been removed through part of the thickness of the structure, allowing the diaphragm to extend into the opening.

As shown in Fig. 2a and 2b, the supporting structure 202, 212 and diaphragm 203, 213 are superimposed on top of each other so that the elastic diaphragm overlaps the supporting structure and the openings 201, 211. In a preferred embodiment, the supporting structure and diaphragm are arranged in a configuration where the fluid distal surface of the diaphragm 204, 214 is in contact with the supporting structure. In alternative embodiments, the supporting structure is in contact fluid proximal surface 205, 215 of the diaphragm. The openings 201, 211 of the supporting structure can be distributed and shaped depending on the fluid viscosity, flow rate, mass, and pressure variations range of the product intended in the flow channel 206, 216. The openings may also be sized and designed to accommodate different amounts of exposure of the diaphragm fluid proximal surface. The openings design needs to account the required structural robustness of the supporting structure, which must be high enough to withstand the pressure created by the diaphragm during its expansion through the openings. The embodiments in Fig. 2a and 2b shows two distinct embodiment 200, 210 of a supporting structure design, where the openings in the first embodiment 200 are bigger than in the second embodiment 210, giving the possibility of adjusting the system parameters to the specific process and type of fluid.

The surface of the diaphragm is adapted to the duty in terms of pressure range, so that the lower the pressure, the more surface can and should be made available in order to impose more flexibility in combination with a larger area of attack which will allow the device work better in low pressure conditions. The openings might be smaller when the pressure range goes up, allowing sufficient support for the hollow membrane to avoid its burst while functioning as intended. The size of the openings is directly related to the pressure range, whereas the distribution is a combination of the need for maximising the active surface, and ensuring that the inflexible supporting structure can still withstand the pressure without collapsing and shaping the openings allowing the hollow membrane to function as intended.

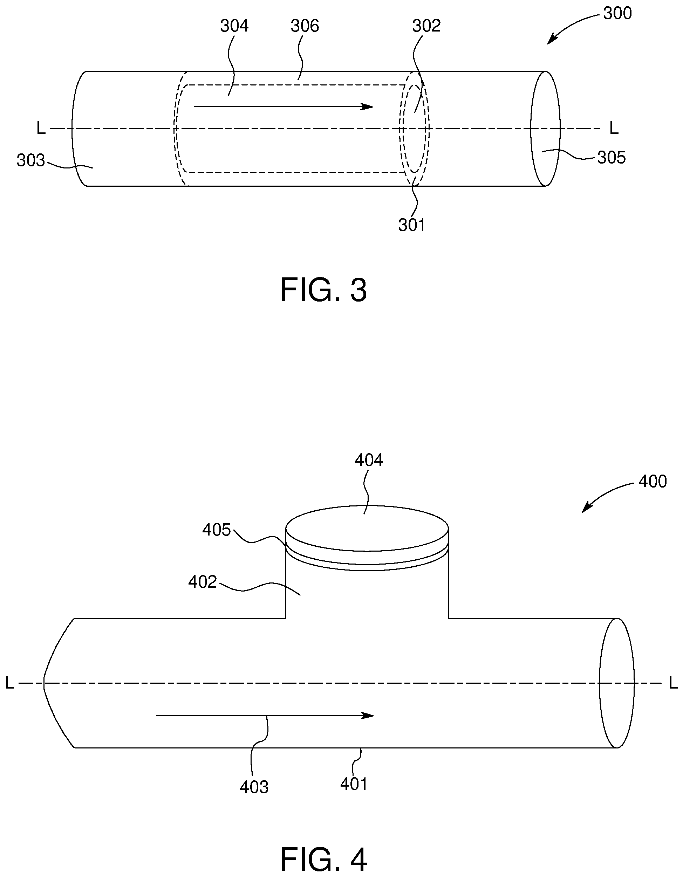

In another embodiment one supporting structure may also comprise differently sized and shaped openings. Another embodiment of a flow compensation device 300 as disclosed herein is shown in Fig. 3. The supporting structure 301 and the elastic diaphragm 302 have a cylindrical shape. Said components are arranged to form a tubular sandwich construction extending coaxially along a longitudinal axis L - L. The longitudinal extension of the device is confined by the inlet aperture 303 placed upstream relative to the flow direction 304 along the L - L axis and the outlet aperture 305 placed downstream relative to the flow direction along the L - L axis and on the opposite side of the tubular sandwich construction. The volume encircled by the fluid proximal surface of the diaphragm in the tubular sandwich construction defines part of the flow channel 306.

Yet another embodiment of a flow compensation device 400 as disclosed herein is shown in Fig. 4. The flow compensation device housing 401 structure extends along the longitudinal axis L - L and comprises a dampening channel 402 extending perpendicular to the longitudinal axis and fluid flow direction 403, forming a T-shape construction. The supporting structure 404 and the diaphragm 405 have disk geometry and are arranged in the dampening channel perpendicular to the longitudinal axis L - L. Several dampening T-shape channels can be attached along the longitudinal axis L - L of the housing structure in order to increase the effective surface of elastic diaphragm in contact with the fluid. The openings (not shown) in the supporting structures in the different channels may in some embodiments vary in size and geometry.

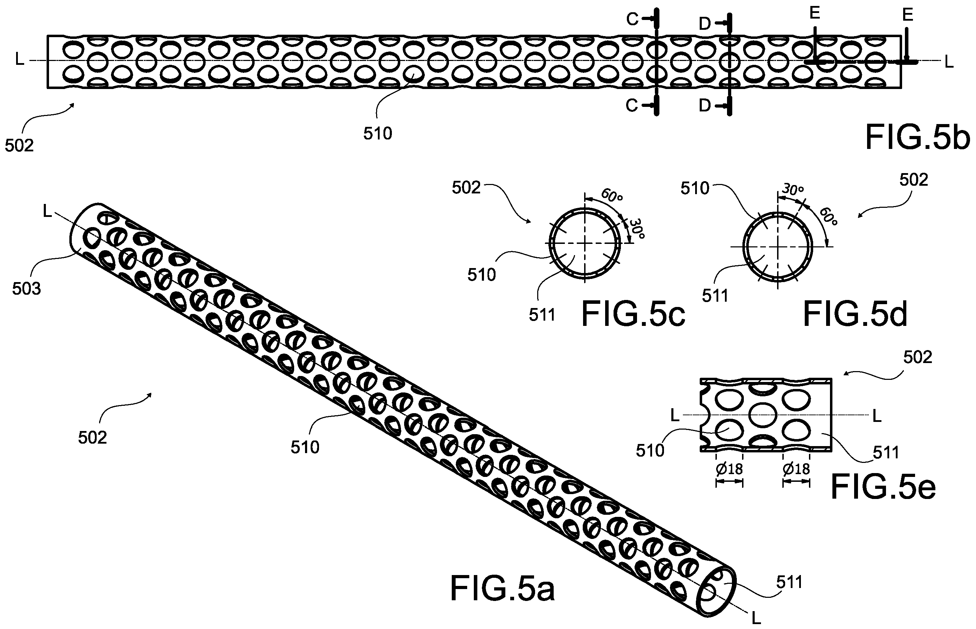

Another embodiment of the inflexible supporting structure 502 is shown in Figs. 5a - 5e. The inflexible supporting structure is formed as a cylindrical frame 503 in which a plurality of evenly sized and evenly distributed openings 510 are provided extending through the cylindrical frame into an expansion chamber 511 into which the elastic diaphragm (not shown) can expand into through the openings during operation as described herein. The expansion chamber can also be used as an observation chamber for observing the integrity of the construction and detect potential leakage as discussed herein, for example in cases where the inflexible supporting structure 502 as disclosed in Fig. 5a - 5e is used in e.g. the embodiment of the flow compensation device 100 disclosed in Figs. 1a - 1c as an alternative to the inflexible supporting structure 102.

The inflexible supporting structure 502 can for example be formed of a metal, such as steel or other materials as discussed herein. As also shown in Figs. 5c, 5d and 5e the opening are 18 millimetres in diameter and are disposed in a uniform pattern on the cylinder. The opening are arranged in cylindrical rows of six opening per row along the longitudinal axis L - L of the cylindrical frame and as shown in sections C - C and D - D of Fig.5b illustrated in Figs.5c and 5d. As can be seen each cylindrical row is rotate 30 degrees relative to a neighbouring cylindrical row.

In another embodiment, both distal and proximal surfaces of the diaphragm are in contact with a supporting structure. This may for example be provided by a sandwich construction using two supporting structures on each side of the diaphragm, to supply a stronger supporting action by the structure. Each supporting structure may have different pattern of openings depending on the specific application and system.

In any of the previous embodiments, a fluid is considered any liquid or fluidized powder having a certain density, viscosity and surface tension. The membrane properties such as elasticity, thickness and composition are selected to meet the requirements imposed by the previous fluid properties.

### Reference Numbers

100 a preferred embodiment of a flow compensation device
101 confined annular flow channel
102 inflexible supporting structure
103 elastic diaphragm
103' proximal facing surface of the elastic diaphragm
103" distal facing surface of the elastic diaphragm
104 cylindrical
105 closed first end
106 closed second end
107 product inlet
108 product outlet
109 observation aperture/channel
110 geometrically distinct openings
200 diagram of a supporting structure and a diaphragm
201 openings in the supporting structure
202 inflexible supporting structure
203 diaphragm
204 fluid distal surface of the diaphragm
205 fluid proximal surface
210 diagram of another supporting structure and diaphragm
211 openings in the supporting structure
212 inflexible supporting structure
213 diaphragm
214 fluid distal surface of the diaphragm
215 fluid proximal surface
300 another flow compensation device
301 supporting structure
302 elastic diaphragm
303 inlet aperture
304 fluid flow direction
305 outlet aperture
306 flow channel
400 yet another flow compensation device
401 device housing structure
402 dampening channel
403 fluid flow direction
404 supporting structure
405 diaphragm
502 another embodiment of a inflexible supporting structure
503 cylindrical frame
510 plurality of openings
511 expansion chamber/observation chamber
L longitudinal axis

## Claims

1. A flow compensation device (100, 200, 210, 300, 400) configured for compensating fluid pressure variations in a flow channel (306) comprising
a. a confined annular flow channel (101) configured for a fluid flow during operation, where the confined annular flow channel (101) preferably comprises an inlet aperture (303) for receiving fluid and an outlet aperture (305) for extracting fluid,
b. at least one rigid supporting structure (102, 202, 212, 301, 404, 502) for supporting at least one elastic diaphragm (103, 203, 213, 302, 405), which supporting structure (102, 202, 212, 301, 404, 502) comprises at least one opening (201, 211, 510), and
c. the elastic diaphragm (103, 203, 213, 302, 405), having a proximal facing surface (103, 203, 213, 302, 405') in contact with the fluid during operation and a distal facing surface (103, 203, 213, 302, 405") not in contact with the fluid during operation,
wherein the supporting structure (102, 202, 212, 301, 404, 502) and diaphragm are superimposed on top of each other so that the elastic diaphragm (103, 203, 213, 302, 405) overlaps the supporting structure (102, 202, 212, 301, 404, 502) and the at least one opening (201, 211, 510), **characterised in that** the at least one supporting structure (102, 202, 212, 301, 404, 502) is inflexible.

2. The flow compensation device (100, 200, 210, 300, 400) of claim 1, wherein the at least one inflexible supporting structure (102, 202, 212, 301, 404, 502) comprises a plurality of openings (201, 211, 510).

3. The flow compensation device (100, 200, 210, 300, 400) of claim 1 or 2, wherein the at least one opening (201, 211, 510) is defined by the inflexible supporting structure (102, 202, 212, 301, 404, 502) encircling the at least one opening (201, 211, 510).

4. The flow compensation device (100, 200, 210, 300, 400) of claim 1, 2 or 3, wherein the at least one inflexible supporting structure (102, 202, 212, 301, 404, 502) comprises a stiffness which prevents deformation of the at least one inflexible supporting structure (102, 202, 212, 301, 404, 502) during operation of the flow compensation device (100, 200, 210, 300, 400) and the elastic diaphragm (103, 203, 213, 302, 405) comprises an elasticity which allows the elastic diaphragm (103, 203, 213, 302, 405) to deform during operation of the flow compensation device (100, 200, 210, 300, 400).

5. The flow compensation device (100, 200, 210, 300, 400) of claim 1, 2, 3 or 4, wherein the size and shape of the at least one opening (201, 211, 510) and the elasticity of the diaphragm are matched to allow a desired expansion of the elastic diaphragm (103, 203, 213, 302, 405) through the plurality of openings (201, 211, 510).

6. The flow compensation device (100, 200, 210, 300, 400) according to any one of the preceding claims, wherein the plurality of openings (201, 211, 510) comprised on the inflexible supporting structure (102, 202, 212, 301, 404, 502) are distributed, sized and shaped depending on the fluid viscosity, flow rate and pressure variations range intended in the flow channel (306), to accommodate different amounts of exposure of the diaphragm proximal surface (103, 203, 213, 302, 405') to the fluid.

7. The flow compensation device (100, 200, 210, 300, 400) according to any one of the preceding claims, wherein the elasticity of the at least one diaphragm depends on the fluid viscosity, flow rate, mass and pressure variations range of the product in the flowing channel.

8. The flow compensation device (100, 200, 210, 300, 400) according to any one of the preceding claims, wherein the fluid distal surface (204, 214) of the at least one diaphragm and/or the fluid proximal surface (205, 215) of the at least one diaphragm is in contact with the inflexible supporting structure (102, 202, 212, 301, 404, 502).

9. The flow compensation device (100, 200, 210, 300, 400) according to any one of the preceding claims, wherein a housing structure (401) confining the annular flow channel (101) extending along a longitudinal axis of the annular flow channel (101) and comprises a dampening channel (402) extending perpendicular to the longitudinal axis, forming a T-shape construction, wherein the inflexible supporting structure (102, 202, 212, 301, 404, 502) and the diaphragm is arranged in the dampening channel (402).

10. The flow compensation device (100, 200, 210, 300, 400) according to any one of the preceding claims, wherein the at least one inflexible supporting structure (102, 202, 212, 301, 404, 502) and the elastic diaphragm (103, 203, 213, 302, 405) form a tubular sandwich construction extending along a longitudinal axis L - L, and where the proximal facing surface (103, 203, 213, 302, 405') of the diaphragm in the tubular sandwich construction defines part of the flow channel (306).

11. The flow compensation device (100, 200, 210, 300, 400) according to any one of the claims 1 - 8, wherein the at least one inflexible supporting structure (102, 202, 212, 301, 404, 502) is a cylindrical supporting structure (102, 202, 212, 301, 404, 502) and where the cylindrical supporting structure (102, 202, 212, 301, 404, 502) extends through the annular flow channel (101), where the cylindrical supporting structure (102, 202, 212, 301, 404, 502) defines an observation channel (109) extending there through, and wherein the cylindrical supporting structure (102, 202, 212, 301, 404, 502) is preferably arranged coaxially along a longitudinal axis L - L of the flow channel (306).

12. The flow compensation device (100, 200, 210, 300, 400) according to claim 11, wherein the flow compensation device (100, 200, 210, 300, 400) further comprises a cylindrical housing (401) extending along the longitudinal axis L - L between a first end and a second end, wherein the cylindrical housing (401) and the first and second ends define the outer limit of the flow channel (306), wherein preferably the first and the second ends of the cylindrical housing (401) are closed and the cylindrical supporting structure (102, 202, 212, 301, 404, 502) extends through the closed ends (105, 106) thereof, and wherein preferably an inlet aperture (303) and an outlet aperture (305) is provided in the cylindrical housing (401).

13. The flow compensation device (100, 200, 210, 300, 400) according to any one the claims 1 - 6 or 9 - 10, further comprising
- a cylindrical housing (401) extending along the longitudinal axis L - L between a closed first end (105) and a closed second end (106), wherein the cylindrical housing (401) and the first and second closed ends defined the outer limit of the flow channel (306),
- that the at least one supporting structure (102, 202, 212, 301, 404, 502) is a cylindrical supporting structure (102, 202, 212, 301, 404, 502), arranged coaxially along the longitudinal axis L - L inside the cylindrical housing (401) and where the cylindrical supporting structure (102, 202, 212, 301, 404, 502) has a radial extent smaller than the radial extent of the cylindrical housing (401) wherein the cylindrical supporting structure (102, 202, 212, 301, 404, 502) defines the inner limit of the flow channel (306), the cylindrical supporting structure (102, 202, 212, 301, 404, 502) further comprises multiple through going geometrically distinct openings (110) extending radially through the cylindrical supporting structure (102, 202, 212, 301, 404, 502),
- that the elastic diaphragm (103, 203, 213, 302, 405), is arranged on the outer surface of the cylindrical supporting structure (102, 202, 212, 301, 404, 502) facing radially away from the longitudinal axis L - L , where the elastic diaphragm (103, 203, 213, 302, 405) overlaps the multiple through going geometrically distinct openings (110),
- a product inlet (107) arranged at the first closed end, extending radially from the cylindrical housing (401), and
- a product outlet (108) arranged at the second closed end, extending radially from the cylindrical housing (401) diametrically opposite the product inlet (107),
- wherein the cylindrical supporting structure (102, 202, 212, 301, 404, 502) extends through the first and second ends of the cylindrical housing (401), providing an observation channel (109) defined by the inner surface of the cylindrical supporting structure (102, 202, 212, 301, 404, 502) facing the longitudinal axis L - L, and
- wherein preferably the annular confined flow channel (101) is defined by the cylindrical housing (401) and the proximal facing surface (103, 203, 213, 302, 405') of the diaphragm.

14. The flow compensation device (100, 200, 210, 300, 400) according to any one of the preceding claims, wherein the elastic diaphragm (103, 203, 213, 302, 405) is reversibly clamped to the closed first end (105) and the closed second end (106).

15. A flow compensation system for compensating fluid pressure variations in a flow channel (306), comprising a pump and a flow compensation device (100, 200, 210, 300, 400) in fluid communication through a mutual flow channel (306) for the flow of a liquid product, where the flow compensation device (100, 200, 210, 300, 400) is provided according to any one of the claims 1 - 14.

## Patentansprüche

1. Durchflusskompensationsvorrichtung (100, 200, 210, 300, 400) konfiguriert zum Kompensieren von Fluiddruckvariationen in einem Strömungskanal (306) umfassend
a) einen eingeschlossenen ringförmigen Strömungskanal (101), der konfiguriert ist, während des Betriebs von einem Fluid durchströmt zu werden, wobei der eingeschlossene ringförmige Strömungskanal (101) vorzugsweise eine Einlassöffnung (303) zum Aufnehmen eines Fluids und eine Auslassöffnung (305) zum Abführen eines Fluids umfasst,
b) mindestens eine starre Tragstruktur (102, 202, 212, 301, 404, 502) zum Tragen mindestens einer elastischen Membran (103, 203, 213, 302, 405), welche Tragstruktur (102, 202, 212, 301, 404, 502) mindestens eine Öffnung (201, 211, 510) umfasst, und
c) die elastische Membran (103, 203, 213, 302, 405), mit einer proximal gerichteten Oberfläche (103, 203, 213, 302, 405'), die während des Betriebs in Kontakt mit dem Fluid steht, und einer distal gerichteten Oberfläche (103, 203, 213, 302, 405"), die während des Betriebs nicht in Kontakt mit dem Fluid steht,
wobei die Tragstruktur (102, 202, 212, 301, 404, 502) und die Membran übereinander angeordnet sind, so dass die elastische Membran (103, 203, 213, 302, 405) die Tragstruktur (102, 202, 212, 301, 404, 502) und die mindestens eine Öffnung (201, 211, 510) überlappt,
**dadurch gekennzeichnet, dass** die mindestens eine Tragstruktur (102, 202, 212, 301, 404, 502) unnachgiebig ist.

2. Durchflusskompensationsvorrichtung (100, 200, 210, 300, 400) nach Anspruch 1, wobei die mindestens eine unnachgiebige Tragstruktur (102, 202, 212, 301, 404, 502) eine Mehrzahl von Öffnungen (201, 211, 510) umfasst.

3. Durchflusskompensationsvorrichtung (100, 200, 210, 300, 400) nach Anspruch 1 oder 2, wobei die mindestens eine Öffnung (201, 211, 510) durch die unnachgiebige Tragstruktur (102, 202, 212, 301, 404, 502) definiert ist, die die mindestens eine Öffnung (201, 211, 510) umgibt.

4. Durchflusskompensationsvorrichtung (100, 200, 210, 300, 400) nach Anspruch 1, 2 oder 3, wobei die mindestens eine unnachgiebige Tragstruktur (102, 202, 212, 301, 404, 502) eine Steifigkeit umfasst, welche eine Verformung der mindestens einen unnachgiebigen Tragstruktur (102, 202, 212, 301, 404, 502) während des Betriebs der Durchflusskompensationsvorrichtung (100, 200, 210, 300, 400) verhindert und die elastische Membran (103, 203, 213, 302, 405) eine Elastizität umfasst, welche der elastischen Membran (103, 203, 213, 302, 405) erlaubt, sich während des Betriebs der Durchflusskompensationsvorrichtung (100, 200, 210, 300, 400) zu verformen.

5. Durchflusskompensationsvorrichtung (100, 200, 210, 300, 400) nach Anspruch 1, 2, 3 oder 4, wobei die Größe und Form der mindestens einen Öffnung (201, 211, 510) und die Elastizität der Membran aufeinander abgestimmt sind, um eine gewünschte Ausdehnung der elastischen Membran (103, 203, 213, 302, 405) durch die Mehrzahl von Öffnungen (201, 211, 510) zu ermöglichen.

6. Durchflusskompensationsvorrichtung (100, 200, 210, 300, 400) nach einem der vorhergehenden Ansprüche, wobei die Mehrzahl von Öffnungen (201, 211, 510), die auf der unnachgiebigen Tragstruktur (102, 202, 212, 301, 404, 502) vorgesehen sind, verteilt, dimensioniert und geformt sind in Abhängigkeit von der Fluidviskosität, dem Durchfluss und dem Bereich der Druckvariationen, der im Strömungskanal (306) vorgesehen ist, um unterschiedliche Grade der Exposition der proximalen Oberfläche (103, 203, 213, 302, 405') der Membran gegenüber dem Fluid zu ermöglichen.

7. Durchflusskompensationsvorrichtung (100, 200, 210, 300, 400) nach einem der vorhergehenden Ansprüche, wobei die Elastizität der mindestens einen Membran von der Fluidviskosität, dem Durchfluss, der Masse und dem Bereich der Druckvariationen des Produkts im strömenden Kanal abhängt.

8. Durchflusskompensationsvorrichtung (100, 200, 210, 300, 400) nach einem der vorhergehenden Ansprüche, wobei die fluidabgewandte Oberfläche (204, 214) der mindestens einen Membran und/oder die fluidzugewandte Oberfläche (205, 215) der mindestens einen Membran in Kontakt mit der unnachgiebigen Tragstruktur (102, 202, 212, 301, 404, 502) ist.

9. Durchflusskompensationsvorrichtung (100, 200, 210, 300, 400) nach einem der vorhergehenden Ansprüche, wobei eine Gehäusestruktur (401), die den ringförmigen Strömungskanal (101) begrenzt, sich entlang einer Längsachse des ringförmigen Strömungskanals (101) erstreckt und einen Dämpfungskanal (402) umfasst, der senkrecht zur Längsachse verläuft und eine T-Form ausbildet, wobei die unnachgiebige Tragstruktur (102, 202, 212, 301, 404, 502) und die Membran im Dämpfungskanal (402) angeordnet ist.

10. Durchflusskompensationsvorrichtung (100, 200, 210, 300, 400) nach einem der vorhergehenden Ansprüche, wobei die mindestens eine unnachgiebige Tragstruktur (102, 202, 212, 301, 404, 502) und die elastische Membran (103, 203, 213, 302, 405) eine rohrförmige Sandwichkonstruktion bilden, die sich entlang einer Längsachse L - L erstreckt, und wobei die proximal gerichtete Oberfläche (103, 203, 213, 302, 405') der Membran in der rohrförmigen Sandwichkonstruktion einen Teil des Strömungskanals (306) definiert.

11. Durchflusskompensationsvorrichtung (100, 200, 210, 300, 400) nach einem der Ansprüche 1 - 8, wobei die mindestens eine unnachgiebige Tragstruktur (102, 202, 212, 301, 404, 502) eine zylindrische Tragstruktur (102, 202, 212, 301, 404, 502) ist und wobei die zylindrische Tragstruktur (102, 202, 212, 301, 404, 502) sich durch den ringförmigen Strömungskanal (101) erstreckt, wobei die zylindrische Tragstruktur (102, 202, 212, 301, 404, 502) einen Beobachtungskanal (109) definiert, der sich durch die zylindrische Tragstruktur hindurch erstreckt, und wobei die zylindrische Tragstruktur (102, 202, 212, 301, 404, 502) vorzugsweise koaxial entlang einer Längsachse L - L des Strömungskanals (306) angeordnet ist.

12. Durchflusskompensationsvorrichtung (100, 200, 210, 300, 400) nach Anspruch 11, wobei die Durchflusskompensationsvorrichtung (100, 200, 210, 300, 400) ferner ein zylindrisches Gehäuse (401) umfasst, das sich entlang der Längsachse L - L zwischen einem ersten Ende und einem zweiten Ende erstreckt, wobei das zylindrische Gehäuse (401) und die ersten und zweiten Enden die äußere Begrenzung des Strömungskanals (306) definieren, wobei vorzugsweise das erste und das zweite Ende des zylindrischen Gehäuses (401) geschlossen sind und die zylindrische Tragstruktur (102, 202, 212, 301, 404, 502) sich durch die geschlossenen Enden (105, 106) hindurch erstreckt, und wobei vorzugsweise eine Einlassöffnung (303) und eine Auslassöffnung (305) im zylindrischen Gehäuse (401) vorgesehen ist.

13. Durchflusskompensationsvorrichtung (100, 200, 210, 300, 400) nach einem der Ansprüche 1 - 6 oder 9 - 10, ferner umfassend
• ein zylindrisches Gehäuse (401), das sich entlang der Längsachse L - L zwischen einem geschlossenen ersten Ende (105) und einem geschlossenen zweiten Ende (106) erstreckt, wobei das zylindrische Gehäuse (401) und die ersten und zweiten geschlossenen Enden die äußere Begrenzung des Strömungskanals (306) definieren,
• dass die mindestens eine Tragstruktur (102, 202, 212, 301, 404, 502) eine zylindrische Tragstruktur (102, 202, 212, 301, 404, 502) ist, angeordnet koaxial entlang der Längsachse L - L innerhalb des zylindrischen Gehäuses (401) und wobei die zylindrische Tragstruktur (102, 202, 212, 301, 404, 502) eine radiale Ausdehnung kleiner als die radiale Ausdehnung des zylindrischen Gehäuses (401) aufweist, wobei die zylindrische Tragstruktur (102, 202, 212, 301, 404, 502) die innere Begrenzung des Strömungskanals (306) definiert, wobei die zylindrische Tragstruktur (102, 202, 212, 301, 404, 502) ferner mehrere durchgehende geometrisch abgegrenzte Öffnungen (110) umfasst, die sich radial durch die zylindrische Tragstruktur (102, 202, 212, 301, 404, 502) erstrecken,
• dass die elastische Membran (103, 203, 213, 302, 405) auf der Außenfläche der zylindrischen Tragstruktur (102, 202, 212, 301, 404, 502) angeordnet ist, die radial von der Längsachse L - L weg gerichtet ist, wobei die elastische Membran (103, 203, 213, 302, 405) die mehreren durchgehenden geometrisch abgegrenzte Öffnungen (110) überlappt,
• ein Produkteinlass (107), angeordnet am ersten geschlossenen Ende, der sich radial vom zylindrischen Gehäuse (401) erstreckt, und
• ein Produktauslass (108), angeordnet am zweiten geschlossenen Ende, der sich radial vom zylindrischen Gehäuse (401) diametral gegenüber dem Produkteinlass (107) erstreckt,
• wobei die zylindrische Tragstruktur (102, 202, 212, 301, 404, 502) sich durch die ersten und zweiten Enden des zylindrischen Gehäuses (401) erstreckt und einen Beobachtungskanal (109) bereitstellt, der durch die innere Oberfläche der zylindrischen Tragstruktur (102, 202, 212, 301, 404, 502) definiert ist, die der Längsachse L - L zugewandt ist, und
• wobei vorzugsweise der ringförmige eingeschlossene Strömungskanal (101) durch das zylindrische Gehäuse (401) und die proximal gerichtete Oberfläche (103, 203, 213, 302, 405') der Membran definiert ist.

14. Durchflusskompensationsvorrichtung (100, 200, 210, 300, 400) nach einem der vorhergehenden Ansprüche, wobei die elastische Membran (103, 203, 213, 302, 405) lösbar an dem geschlossenen ersten Ende (105) und dem geschlossenen zweiten Ende (106) eingespannt ist.

15. Durchflusskompensationssystem zum Kompensieren von Fluiddruckvariationen in einem Strömungskanal (306), umfassend eine Pumpe und eine Durchflusskompensationsvorrichtung (100, 200, 210, 300, 400) in fluidischer Verbindung durch einen gemeinsamen Strömungskanal (306) für den Fluss eines flüssigen Produkts, wobei die Durchflusskompensationsvorrichtung (100, 200, 210, 300, 400) gemäß einem der Ansprüche 1 - 14 ausgebildet ist.

## Revendications

1. Dispositif de compensation d'écoulement (100, 200, 210, 300, 400) configuré pour compenser des variations de pression de fluide dans un canal d'écoulement (306) comprenant
a. un canal d'écoulement annulaire confiné (101) configuré pour un écoulement de fluide pendant le fonctionnement, où le canal d'écoulement annulaire confiné (101) comprend de préférence une ouverture d'entrée (303) pour recevoir du fluide et une ouverture de sortie (305) pour extraire du fluide,
b. au moins une structure de support rigide (102, 202, 212, 301, 404, 502) pour supporter au moins un diaphragme élastique (103, 203, 213, 302, 405), laquelle structure de support (102, 202, 212, 301, 404, 502) comprend au moins une ouverture (201, 211, 510), et
c. le diaphragme élastique (103, 203, 213, 302, 405), ayant une surface orientée proximalement (103, 203, 213, 302, 405') en contact avec le fluide pendant le fonctionnement et une surface orientée distalement (103, 203, 213, 302, 405") n'étant pas en contact avec le fluide pendant le fonctionnement,
dans lequel la structure de support (102, 202, 212, 301, 404, 502) et le diaphragme sont superposés l'un sur l'autre de sorte que le diaphragme élastique (103, 203, 213, 302, 405) chevauche la structure de support (102, 202, 212, 301, 404, 502) et l'au moins une ouverture (201, 211, 510),
**caractérisé en ce que** l'au moins une structure de support (102, 202, 212, 301, 404, 502) est inflexible.

2. Dispositif de compensation d'écoulement (100, 200, 210, 300, 400) selon la revendication 1, dans lequel l'au moins une structure de support inflexible (102, 202, 212, 301, 404, 502) comprend une pluralité d'ouvertures (201, 211, 510).

3. Dispositif de compensation d'écoulement (100, 200, 210, 300, 400) selon la revendication 1 ou 2, dans lequel l'au moins une ouverture (201, 211, 510) est définie par la structure de support inflexible (102, 202, 212, 301, 404, 502) entourant l'au moins une ouverture (201, 211, 510).

4. Dispositif de compensation d'écoulement (100, 200, 210, 300, 400) selon la revendication 1, 2 ou 3, dans lequel l'au moins une structure de support inflexible (102, 202, 212, 301, 404, 502) présente une rigidité qui empêche la déformation de l'au moins une structure de support inflexible (102, 202, 212, 301, 404, 502) pendant le fonctionnement du dispositif de compensation d'écoulement (100, 200, 210, 300, 400) et le diaphragme élastique (103, 203, 213, 302, 405) présente une élasticité qui permet au diaphragme élastique (103, 203, 213, 302, 405) de se déformer pendant le fonctionnement du dispositif de compensation d'écoulement (100, 200, 210, 300, 400).

5. Dispositif de compensation d'écoulement (100, 200, 210, 300, 400) selon la revendication 1, 2, 3 ou 4, dans lequel la taille et la forme de l'au moins une ouverture (201, 211, 510) et l'élasticité du diaphragme sont adaptées l'une à l'autre de façon à permettre une expansion souhaitée du diaphragme élastique (103, 203, 213, 302, 405) à travers la pluralité d'ouvertures (201, 211, 510).

6. Dispositif de compensation d'écoulement (100, 200, 210, 300, 400) selon l'une quelconque des revendications précédentes, dans lequel la pluralité d'ouvertures (201, 211, 510) comprises sur la structure de support inflexible (102, 202, 212, 301, 404, 502) sont réparties, dimensionnées et formées en fonction de la viscosité du fluide, du débit et de la plage de variations de pression prévue dans le canal d'écoulement (306), afin d'accommoder différentes quantités d'exposition de la surface proximale du diaphragme (103, 203, 213, 302, 405') au fluide.

7. Dispositif de compensation d'écoulement (100, 200, 210, 300, 400) selon l'une quelconque des revendications précédentes, dans lequel l'élasticité de l'au moins un diaphragme dépend de la viscosité du fluide, du débit, de la masse et de la plage de variations de pression du produit dans le canal d'écoulement.

8. Dispositif de compensation d'écoulement (100, 200, 210, 300, 400) selon l'une quelconque des revendications précédentes, dans lequel la surface distale de fluide (204, 214) de l'au moins un diaphragme et/ou la surface proximale de fluide (205, 215) de l'au moins un diaphragme est en contact avec la structure de support inflexible (102, 202, 212, 301, 404, 502).

9. Dispositif de compensation d'écoulement (100, 200, 210, 300, 400) selon l'une quelconque des revendications précédentes, dans lequel une structure de boîtier (401) confinant le canal d'écoulement annulaire (101) s'étendant le long d'un axe longitudinal du canal d'écoulement annulaire (101) et comprenant un canal d'amortissement (402) s'étendant perpendiculairement à l'axe longitudinal, formant une construction en forme de T, dans lequel la structure de support inflexible (102, 202, 212, 301, 404, 502) et le diaphragme est agencé dans le canal d'amortissement (402).

10. Dispositif de compensation d'écoulement (100, 200, 210, 300, 400) selon l'une quelconque des revendications précédentes, dans lequel l'au moins une structure de support inflexible (102, 202, 212, 301, 404, 502) et le diaphragme élastique (103, 203, 213, 302, 405) forment une construction sandwich tubulaire s'étendant le long d'un axe longitudinal L -L, et où la surface orientée proximalement (103, 203, 213, 302, 405') du diaphragme dans la construction sandwich tubulaire définit une partie du canal d'écoulement (306).

11. Dispositif de compensation d'écoulement (100, 200, 210, 300, 400) selon l'une quelconque des revendications 1 - 8, dans lequel l'au moins une structure de support inflexible (102, 202, 212, 301, 404, 502) est une structure de support cylindrique (102, 202, 212, 301, 404, 502) et où la structure de support cylindrique (102, 202, 212, 301, 404, 502) s'étend à travers le canal d'écoulement annulaire (101), où la structure de support cylindrique (102, 202, 212, 301, 404, 502) définit un canal d'observation (109) s'étendant à travers celle-ci, et dans lequel la structure de support cylindrique (102, 202, 212, 301, 404, 502) est de préférence agencée coaxialement le long d'un axe longitudinal L - L du canal d'écoulement (306).

12. Dispositif de compensation d'écoulement (100, 200, 210, 300, 400) selon la revendication **11,** dans lequel le dispositif de compensation d'écoulement (100, 200, 210, 300, 400) comprend en outre un boîtier cylindrique (401) s'étendant le long de l'axe longitudinal L - L entre une première extrémité et une seconde extrémité, dans lequel le boîtier cylindrique (401) et les première et seconde extrémités définissent la limite extérieure du canal d'écoulement (306), dans lequel, de préférence, la première et la seconde extrémités du boîtier cylindrique (401) sont fermées et la structure de support cylindrique (102, 202, 212, 301, 404, 502) s'étend à travers les extrémités fermées (105, 106) de celui-ci, et dans lequel, de préférence, une ouverture d'entrée (303) et une ouverture de sortie (305) est prévue dans le boîtier cylindrique (401).

13. Dispositif de compensation d'écoulement (100, 200, 210, 300, 400) selon l'une quelconque les revendications 1 - 6 ou 9 - 10, comprenant en outre
- un boîtier cylindrique (401) s'étendant le long de l'axe longitudinal L - L entre une première extrémité fermée (105) et une seconde extrémité fermée (106), dans lequel le boîtier cylindrique (401) et les première et seconde extrémités fermées définissent la limite extérieure du canal d'écoulement (306),
- que l'au moins une structure de support (102, 202, 212, 301, 404, 502) est une structure de support cylindrique (102, 202, 212, 301, 404, 502), agencée coaxialement le long de l'axe longitudinal L - L à l'intérieur du boîtier cylindrique (401) et où la structure de support cylindrique (102, 202, 212, 301, 404, 502) a une extension radiale inférieure à l'extension radiale du boîtier cylindrique (401), dans lequel la structure de support cylindrique (102, 202, 212, 301, 404, 502) définit la limite intérieure du canal d'écoulement (306), la structure de support cylindrique (102, 202, 212, 301, 404, 502) comprend en outre de multiples ouvertures géométriquement distinctes traversantes (110) s'étendant radialement à travers la structure de support cylindrique (102, 202, 212, 301, 404, 502),
- que le diaphragme élastique (103, 203, 213, 302, 405), est agencé sur la surface extérieure de la structure de support cylindrique (102, 202, 212, 301, 404, 502) faisant face radialement à l'opposé de l'axe longitudinal L - L, où le diaphragme élastique (103, 203, 213, 302, 405) chevauche les multiples ouvertures géométriquement distinctes traversantes (110),
- une entrée de produit (107) agencée à la première extrémité fermée, s'étendant radialement à partir du boîtier cylindrique (401), et
- une sortie de produit (108) agencée à la seconde extrémité fermée, s'étendant radialement à partir du boîtier cylindrique (401) diamétralement à l'opposé de l'entrée de produit (107),
- dans lequel la structure de support cylindrique (102, 202, 212, 301, 404, 502) s'étend à travers les première et seconde extrémités du boîtier cylindrique (401), fournissant un canal d'observation (109) défini par la surface intérieure de la structure de support cylindrique (102, 202, 212, 301, 404, 502) faisant face à l'axe longitudinal L - L, et
- dans lequel, de préférence, le canal d'écoulement annulaire confiné (101) est défini par le boîtier cylindrique (401) et la surface orientée proximalement (103, 203, 213, 302, 405') du diaphragme.

14. Dispositif de compensation d'écoulement (100, 200, 210, 300, 400) selon l'une quelconque des revendications précédentes, dans lequel le diaphragme élastique (103, 203, 213, 302, 405) est fixé de manière réversible à la première extrémité fermée (105) et à la seconde extrémité fermée (106).

15. Système de compensation d'écoulement pour compenser des variations de pression de fluide dans un canal d'écoulement (306), comprenant une pompe et un dispositif de compensation d'écoulement (100, 200, 210, 300, 400) en communication fluidique à travers un canal d'écoulement commun (306) pour l'écoulement d'un produit liquide, où le dispositif de compensation d'écoulement (100, 200, 210, 300, 400) est prévu selon l'une quelconque des revendications 1 - 14.
